# EUROPEAN PATENT APPLICATION

(11) **EP 1 179 559 A1**
(43) Date of publication of application: **13.02.2002**
(21) Application number: 00117430.9
(22) Date of filing: 11.08.2000
(51) Int. Cl.: C08J 7/12, C08J 3/18, G02F 3/02

(54) **A method of treating rubber surface**

(71) Applicant: Wang, Hsiang-Hua, Cambridge CB2 1FD (GB)
(72) Inventor: Wang, Hsiang-Hua, Cambridge CB2 1FD (GB)

(57) **Abstract**

A method of treating surface of a rubber member includes steps of adding sulfur and conductive granules to raw rubber material, baking the rubber material to remove impurities and again adding sulfur to the rubber material, baking the rubber material to vaporize the sulfide from the rubber material, spraying bridging agent and plasticizer on surface of the rubber material, baking the rubber material at a constant temperature to make the surface of the rubber material become hard, treating the rubber with electroplating process, engraving characters or the like by laser or screenprinting characters or the like on the surface of the rubber material, and coating a protection film on the surface of the rubber material.

## Description

### BACKGROUND OF THE INVENTION

### 1. Field of the Invention

This invention is related to a method of treating rubber surface and in particular to one which is resistant to wear, lustrous in appearance, durable in use, and supple to the finger touch of the user.

### 2. Description of the Prior Art

It has been found that the keybuttons of mobile telephones, computer keyboards and calculators utilize a plastic cover to enclose the conductive rubber on the bottom. The reason why rubber is used at the bottom is that rubber is pliant in property and will not cause damage to the printed circuit board. The reason why the plastic is chosen to make the cover is that plastic is hard and wear-resistant.

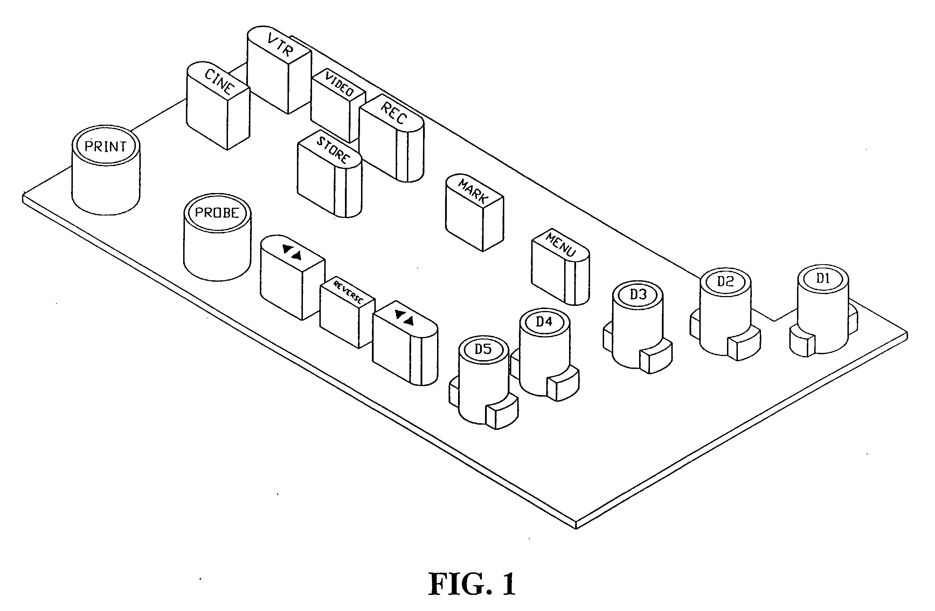

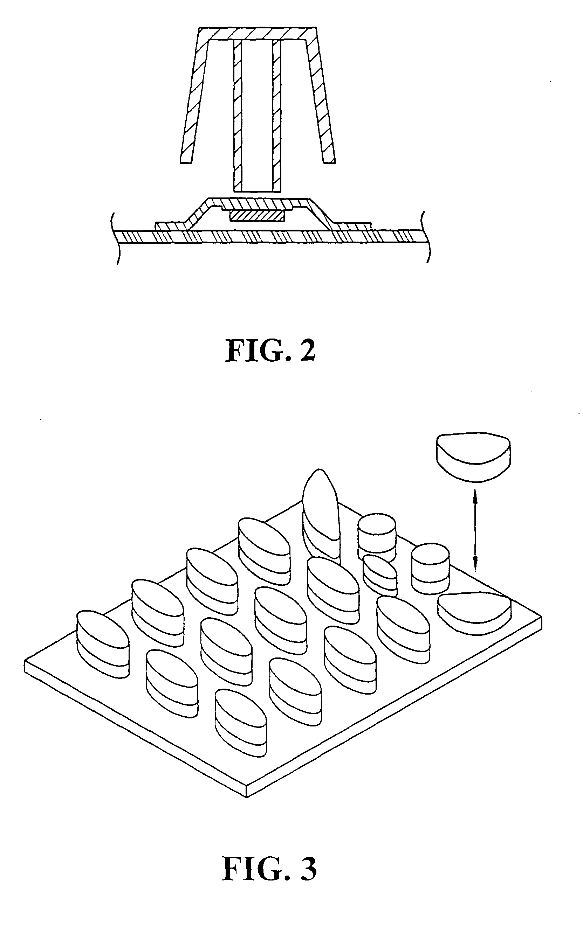

The structure of three most commonly used keybuttons will be described as follows:
- 1.: The first conventional keybutton is made of conductive silicone rubber which is directly printed with silicone gel ink and then heated to affix the ink (see FIG. 1). This kind of keybuttons is widely used in low-priced remote controllers and calculators.
- 2.: The second conventional keybutton includes a conductive rubber member and a plastic cover arranged on the conductive rubber member and is widely in computer keyboards (see FIG. 2).
- 3.: The third conventional keybutton is widely used in mobile telephones (see FIG. 3) and a conductive rubber member and a plastic member having the same size as the conductive rubber member and affixed on the top of the conductive rubber member.

However, the manufacturing method of the above-mentioned keybuttons is
complicated thereby increasing the cost and wasting time. Conductive silicone rubber (or called conductive rubber) is the most suitable material for making keybuttons. However, it is impossible to obtain the same printing or painting effect on the keybutton made of silicone rubber as the keybutton made of plastic. In addition, the sulfide in the silicone rubber will be just like a mine for electronic components, because the sulfide will be released under proper temperature thereby oxidizing the electronic components and therefore causing damage to the electronic circuit.

Therefore, it is an object of the present invention to provide an improved method of treating the surface of a rubber member which can obviate and mitigate the above-mentioned drawbacks.

### SUMMARY OF THE INVENTION

This invention is related to an improved method of treating rubber surface.

It is the primary object of the present invention to provide a method of treating rubber surface which can be easily processed with electroplating or the like.

It is another object of the present invention to provide a method of treating rubber surface which is resistant to wear.

It is still another object of the present invention to provide a method of treating rubber surface which is lustrous in appearance.

It is still another object of the present invention to provide a method of treating rubber surface which is durable in use.

It is still object of the present invention to provide a method of treating rubber surface which is supple to the finger touch of a user.

It is a further object of the present invention to provide a method of treating rubber surface which can remove the sulfide from rubber by means of vaporization.

According to a preferred embodiment of the present invention, a method of treating surface of a rubber member includes steps of adding sulfur and conductive granules to raw rubber material, baking the rubber material to remove impurities and again adding sulfur to the rubber material, baking the rubber material to vaporize the sulfide therefrom, spraying bridging agent and plasticizer on surface of the rubber material, baking the rubber material at a constant temperature to make the surface of the rubber material become hard, treating the rubber with electroplating process, engraving characters or the like by laser or printing characters or the like on the surface of the rubber material, and coating a protection film on the surface of the rubber material.

The foregoing objects and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts. Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG. 1 illustrates a first kind of conventional keybuttons;
FIG. 2 is a sectional view of a second kind of conventional keybuttons;
FIG. 3 illustrates a third kind of conventional keybuttons;
FIG. 4 is flow chart of the present invention;
FIG. 5 is a schematic view illustrating the electroplating relations of the present invention; and
FIG. 6 is a sectional view of a keybutton according to the present invention.

### DETAILED DESCRIPTION OF THE PREFERRED EMBODIMENT

For the purpose of promoting an understanding of the principles of the invention, reference will now be made to the embodiment illustrated in the drawings. Specific language will be used to describe same. It will, nevertheless, be understood that no limitation of the scope of the invention is thereby intended, such alterations and further modifications in the illustrated device, and such further applications of the principles of the invention as illustrated herein being contemplated as would normally occur to one skilled in the art to which the invention relates.

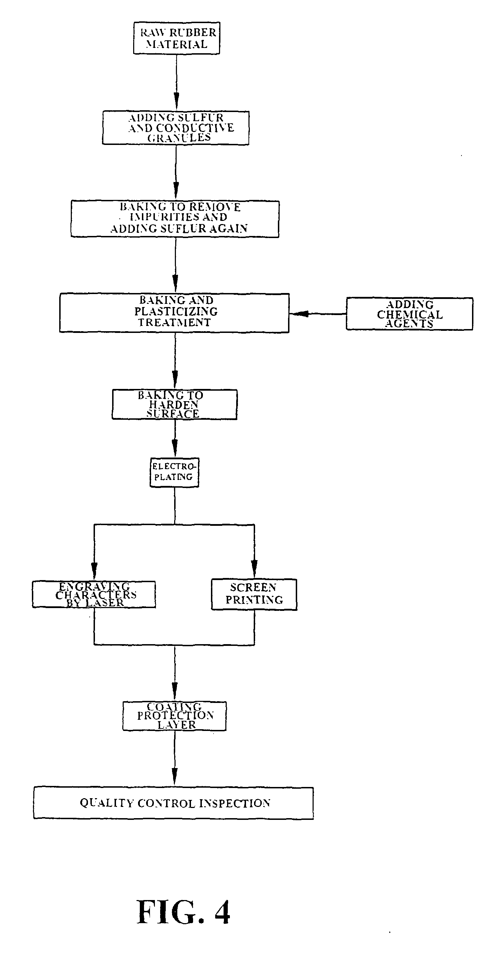

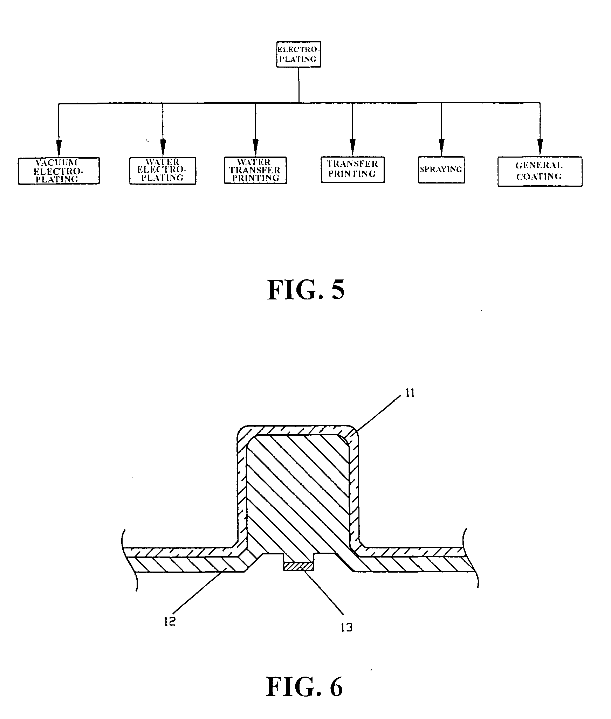

With reference to the drawings and in particular to FIGS. 4 and 5 thereof, the method of treating rubber surface according to the present invention generally comprises the steps of adding sulfur and conductive granules to raw rubber material, baking the rubber material to remove impurities and again adding sulfur to the rubber material, baking the rubber to vaporize the sulfide from the rubber, spraying bridging agent and plasticizer on the surface of the rubber, baking the rubber at a constant temperature to make the surface of the rubber become hard, treating the rubber with electroplating process (the rubber material may be processed with transparency treatment), engraving characters or the like by laser or screen-printing characters or the like on the surface of the rubber, coating a protection film on the surface of the rubber, and inspecting the rubber material.

The rubber material may be natural rubber, synthetic polyisoprene, butyl rubber, silicone rubber, polyethylene, acrylonitrite rubber, butadiene rubber, styrene-butadiene rubber, butyl bromide rubber, isoprene rubber; chlorosulfonated polyolefin rubber, epichlorohydrin rubber, fluororubber, acrylate rubber, and chloroprene rubber.

Referring to FIG. 5, the electroplating process comprises the steps of vacuum electroplating, water electroplating, water transfer printing, transfer printing, spraying, and general coating.

Referring to FIG. 6, the surface of the keybutton treated by the method according to the present invention has a hard layer 11 which looks like plastic (the rubber cannot be electroplated unless its surface is hardened), but the bottom 12 of the layer 11 is still pliant and supple in properties. The conductive element 13 is arranged at the bottom of the layer 11. Hence, the method according to the present invention can provide a rubber member with a hard surface but pliant and supple properties.

Accordingly, the method of treating rubber surface according to the present invention can reduce the cost and decrease the time required for manufacturing keybuttons and can provide a rubber keybutton with a hardened surface for facilitating electroplating processes thereby making the keybutton lustrous in outlook and supple to the finger touch of a user.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A method of treating rubber surface comprising steps of adding sulfur and conductive granules to raw rubber material, baking said rubber material to remove impurities and again adding sulfur to said rubber material, baking said rubber material to vaporize sulfide therefrom, spraying bridging agent and plasticizer on surface of said rubber material, baking said rubber material at a constant temperature to make said surface of said rubber material become hard, treating said rubber with electroplating process, engraving characters or the like by laser or screen-printing characters or the like on said surface of said rubber material, and coating a protection film on said surface of said rubber material.

2. The method of treating surface of a rubber member as claimed in claim 1, wherein said surface is processed with transparency treatment.

3. The method of treating surface of a rubber member as claimed in claim 1, wherein said electroplating process is a vacuum eletroplating process.

4. The method of treating surface of a rubber member as claimed in claim 1, wherein said electroplating process is a water electroplating process.

5. The method of treating surface of a rubber member as claimed in claim 1, wherein said electroplating process is a water transfer printing process.

6. The method of treating surface of a rubber member as claimed in claim 1, wherein said electroplating process is a transfer printing process.

7. The method of treating surface of a rubber member as claimed in claim 1, wherein said electroplating process is a paint spraying process.

8. The method of treating surface of a rubber member as claimed in claim 1, wherein said electroplating process is a spraying process.

9. The method of treating surface of a rubber member as claimed in claim 1, wherein said rubber material is natural rubber.

10. The method of treating surface of a rubber member as claimed in claim 1, wherein said rubber material is synthetic polyisoprene.

11. The method of treating surface of a rubber member as claimed in claim 1, wherein said rubber material is butyl rubber.

12. The method of treating surface of a rubber member as claimed in claim 1, wherein said rubber material is silicone rubber.

13. The method of treating surface of a rubber member as claimed in claim 1, wherein said rubber material is polyethylene.

14. The method of treating surface of a rubber member as claimed in claim 1, wherein said rubber material is acrylonitrite rubber.

15. The method of treating surface of a rubber member as claimed in claim 1, wherein said rubber material is butadiene rubber.

16. The method of treating surface of a rubber member as claimed in claim 1, wherein said rubber material is styrene-butadiene rubber.

17. The method of treating surface of a rubber member as claimed in claim 1, wherein said rubber material is butyl bromide rubber.

18. The method of treating surface of a rubber member as claimed in claim 1, wherein said rubber material is isoprene rubber.

19. The method of treating surface of a rubber member as claimed in claim 1, wherein said rubber material is chlorosulfonated polyolefin.

20. The method of treating surface of a rubber member as claimed in claim 1, wherein said rubber material is epichlorohydrin rubber.

21. The method of treating surface of a rubber member as claimed in claim 1, wherein said rubber material is fluororubber.

22. The method of treating surface of a rubber member as claimed in claim 1, wherein said rubber material is acrylate rubber.

23. The method of treating surface of a rubber member as claimed in claim 1, wherein said rubber material is chloroprene rubber.
